**Europäisches Patentamt**

**European Patent Office**

**Office européen des brevets**

(19)

(11) Veröffentlichungsnummer: **0 026 385**
**B1**

(12) # EUROPÄISCHE PATENTSCHRIFT

(45) Veröffentlichungstag der Patentschrift:
**19.10.83**

(51) Int. Cl.³: **G 08 B 13/16**

(21) Anmeldenummer: **80105490.9**

(22) Anmeldetag: **12.09.80**

(54) **Ultraschall-Raumüberwachungssystem nach dem Impuls-Echo-Verfahren.**

(30) Priorität: **26.09.79 DE 2938969**

(43) Veröffentlichungstag der Anmeldung:
**08.04.81 Patentblatt 81/14**

(45) Bekanntmachung des Hinweises auf die Patenterteilung:
**19.10.83 Patentblatt 83/42**

(84) Benannte Vertragsstaaten:
**AT BE CH FR GB IT LI NL SE**

(56) Entgegenhaltungen:
**FR-A-2 381 309**
**US-A-3 474 400**
**US-A-3 967 283**
**US-A-4 028 690**

(73) Patentinhaber: **SIEMENS AKTIENGESELLSCHAFT,
Berlin und München Wittelsbacherplatz 2,
D-8000 München 2 (DE)**

(72) Erfinder: **Kleinschmidt, Peter, Dipl.-Phys.,
Klagenfurterstrasse 12, D-8000 München 90 (DE)**
Erfinder: **Mágori, Valentin, Dipl.-Phys.,
Limburgerstrasse 17, D-8000 München 90 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Ultraschall-Raumüberwachungssystem nach dem Impuls-Echo-Verfahren

Die vorliegende Erfindung bezieht sich auf ein Ultraschall-Raumüberwachungssystem nach dem Impuls-Echo-Verfahren, bei dem ein Ultraschall-Sende-/Empfangswandler vorgesehen ist, der periodisch Abtastimpulse sendet, bei dem der Ultraschall-Sende-/Empfangswandler jeweils in der Zeitspanne zwischen zwei Abtastimpulsen empfangsbereit geschaltet wird, bei dem die zeitliche Folge von einem Abtastimpuls zuordenbaren Echosignalen nach Durchlaufen eines Analog/Digital-Wandlers als digitales Abbild in Form einer Folge von Binärworten, wobei ein Binärwort das akustische Abbild einer kugelschalenförmigen, bemeßbaren Raumzone mit dem Ultraschallgerät im Zentrum repräsentiert, in der Reihenfolge ihres Eintreffens in einen Speicher eingelesen werden, bei dem jeweils zumindest zwei zeitlich aufeinanderfolgende Folgen von digitale Abbilder des Gesamtraumes repräsentierenden Binärwörtern in einer Vergleichseinrichtung derart miteinander verglichen werden, daß bei einer vorliegenden Abweichung zwischen zumindest zwei betreffenden Binärwörtern eine Relevanzprüfung vorgenommen wird, wobei gemäß dem Verwendungszweck des Ultraschall-Raumüberwachungssystems irrelevante, durch beispielsweise periodische Bewegungen von echoerzeugenden Gegenständen hervorgerufene Abweichungen unausgewertet bleiben, und bei dem bei Vorliegen einer relevanten Abweichung eine Meldevorrichtung aktiviert wird.

Bekannte Raumüberwachungssysteme nach den verschiedensten Prinzipien haben im allgemeinen den Nachteil, daß Fehlalarme wegen der im allgemeinen hohen notwendigen Sensitivität solcher Einrichtungen ausgelöst werden können.

Aus der FR-A-2 381 309 ist ein Ultraschall-Überwachungssystem nach dem Impuls-Echo-Verfahren bekannt, bei dem ein Ultraschall-Sende-/Empfangswandler vorgesehen ist, der periodisch Abtastimpulse sendet, und bei dem der Ultraschall-Sende-/Empfangswandler jeweils in der Zeitspanne zwischen zwei Abtastimpulsen empfangsbereit geschaltet wird, bei dem die zeitliche Folge von einem Abtastimpuls zuordenbaren Echosignalen nach Durchlaufen eines Analog/Digitalwandlers als digitales Abbild in Form einer Folge von Binärwörtern, wobei ein Binärwort das akustische Abbild einer bemeßbaren Zone mit dem Ultraschallgerät in der Reihenfolge ihres Eintreffens in einem Speicher gespeichert wird, bei dem jeweils zumindest zwei zeitlich aufeinanderfolgende Folgen von digitale Abbilder repräsentierenden Binärwörtern derart miteinander verglichen werden, daß bei einer vorliegenden Abweichung zwischen zumindest zwei betreffenden Binärwörtern eine Relevanzprüfung vorgenommen wird, und wobei gemäß dem Verwendungszweck des Ultraschall-Überwachungssystems irrelevante, von echoerzeugenden Gegenständen hervorgerufene Abweichungen unausgewertet bleiben, während das Vorliegen einer relevanten Abweichung in einer Meldevorrichtung angezeigt wird.

Aus US-A-3 474 400 ist es bekannt, Schallüberwachungsgeräte für verschiedene Anwendungsgebiete, darunter Überwachung eines Raumes (einer Garage) einzusetzen.

Aus der US-A-3 967 283 ist es bekannt, den zu überwachenden Raum in mehrere Zonen aufzuteilen und bei der Prüfung der akustischen Abbilder mindestens die Binärwörter zweier benachbarter Zonen miteinander zu vergleichen, einen dem Ultraschall-Empfangswandler nachgeschalteten Signalverstärker vorzusehen, der die Echosignale derart regelt, daß einem dem Signalverstärker nachgeschalteten Analog/Digital-Wandler zur Erzeugung betreffender Binärwörter Signale mit geeigneten Amplituden zugeführt werden, in den Binärwörtern die jeweils zu verzeichnende Amplitude eines Echosignals durch mehrere Bits zu kennzeichnen und die den empfangenen Echosignalen entsprechenden Binärwörter in der Reihenfolge ihres Eintreffens in einen Speicher einzulesen und bei Bedarf zyklisch umlaufen zu lassen.

Der vorliegenden Erfindung liegt die Aufgabe zugrunde, ein funktionssicheres, hochempfindliches und dabei technisch einfaches, mit hoher Fehlalarmsicherheit ausgestattetes Raumüberwachungssystem zu schaffen, das die genannten Nachteile bekannter Raumüberwachungseinrichtungen nicht hat und darüber hinaus in der Lage ist, die Geschwindigkeit von Objektbewegungen in dem zu überwachenden Raum sicher und auf einfache Art und Weise zu prüfen.

Diese Aufgabe wird durch ein Ultraschall-Raumüberwachungssystem nach dem Impuls-Echo-Verfahren, bei dem ein Ultraschall-Sende-/Empfangswandler vorgesehen ist, der periodisch Abtastimpulse sendet, bei dem der Ultraschall-Sende-/Empfangswandler jeweils in der Zeitspanne zwischen zwei Abtastimpulsen empfangsbereit geschalet wird, gelöst, bei dem die zeitliche Folge von einem Abtastimpulse zuordenbaren Echosignalen nach Durchlaufen eines Analog/Digital-Wandlers als digitales Abbild in Form einer Folge von Binärwörtern, wobei ein Binärwort das akustische Abbild einer kugelschalenförmigen, bemeßbaren Raumzone mit dem Ultraschallgerät im Zentrum repräsentiert, in der Reihenfolge ihres Eintreffens in einem Speicher eingelesen werden, bei dem jeweils zumindest zwei zeitlich aufeinanderfolgende Folgen von digitale Abbilder des Gesamtraumes repräsentierenden Binärwörtern in einer Vergleichseinrichtung derart miteinander verglichen werden, daß bei einer vorliegenden Abweichung zwischen zumindest zwei betreffenden Binärwörtern eine Relevanzprüfung RP vorgenommen wird, wobei gemäß dem Verwendungszweck des Ultraschall-Raumüberwachungssystem irrelevante, durch beispielsweise periodische Bewegungen von echoerzeugenden Gegenständen hervorgerufene Abweichungen unausgewertet bleiben, und bei dem bei Vorliegen einer relevanten Abweichung eine Meldevorrichtung 6 aktiviert wird. Das erfindungsgemäße Ultraschall-Raumüberwachungssystem ist dadurch gekennzeichnet, daß zur Prüfung der Geschwindigkeit von etwaigen Objektbewegungen der Dopplereffekt ausgenutzt wird und daß in den betreffenden Binärwörtern zumindest 1 Bit zur Kennzeichnung der durch den Dopplereffekt angezeigten Geschwindigkeit vorgesehen ist.

Der überstrichene Raumwinkel innerhalb des zu überwachenden Raumes ist dabei durch die vorgegebene Richtcharakteristik der/des verwendeten Ultraschallwandler(s) bestimmt.

Die Erfindung bietet den Vorteil, daß das Ultraschall-Raumüberwachungssystem eine hohe Empfindlichkeit hat, ohne daß dazu ein besonderer Aufwand erforderlich ist. Darüber hinaus hat das erfindungsgemäße Raumüberwachungssystem eine hohe Fehlalarmsicherheit, da gemäß dem verwendeten Prinzip Luftschlieren bedeutungslos sind und eine eindeutige Unterscheidungsmöglichkeit zwischen relevanten und irrelevanten bewegten Objekten gegeben ist. Ebenfalls ist vorteilhafterweise eine große Unempfindlichkeit gegenüber Störschall, der als solcher erkannt wird, gegeben. Des weiteren ist vorteilhaft, daß durch die Verwendung von Ultraschall im Gegensatz zu verschiedenen bekannten, elektromagnetische Wellen verwendenden Raumüberwachungssystemen keine Funkgenehmigung erforderlich ist. Außerdem ist vorteilhaft, daß das erfindungsgemäße Raumüberwachungssystem vollkommen unempfindlich gegenüber Lichteinwirkungen, elektrischen, magnetischen oder elektromagnetischen Feldern ist. Im übrigen können vorteilhaft billige Sensoren Verwendung finden. Die Einsetzbarkeit von rein digitalen Techniken, z. B. die Einsetzbarkeit von Mikroprozessoren, zur Auswertung der empfangenen Echosignale macht darüber hinaus das Raumüberwachungssystem gemäß der vorliegenden Erfindung flexibel, so daß es beispielsweise mittels verschiedener software-Versionen an unterschiedliche Aufgaben anpaßbar ist. Damit kann das System trotz unterschiedlicher Verwendungszwecke hardware-mäßig einheitlich aufgebaut werden.

Weiterbildungen der Erfindung sind durch die in den Unteransprüchen angegebenen Merkmale gekennzeichnet.

Im folgenden wird die Erfindung anhand mehrerer Ausführungsbeispiele für die Erfindung durch die betreffenden Figuren im einzelnen erläutert.

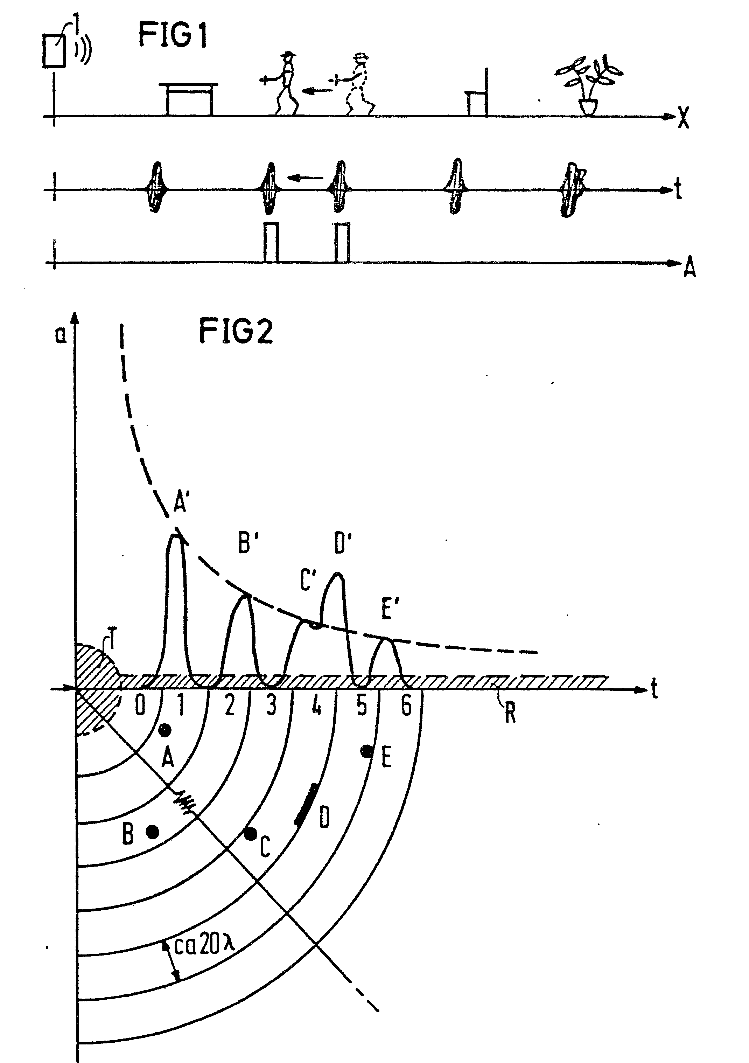

Fig. 1 zeigt schematisch die Anordnung eines Ultraschall-Sende-/Empfangswandlers 1 in einem zu überwachenden Raum, in dem unbewegliche Gegenstände in einer Entfernung x gestaffelt und ein bewegliches Objekt, in diesem Fall ein angenommener Einbrecher, Echosignale über die Zeit t gemäß den Ultraschall-Laufzeiten zeitlich gestaffelt erzeugen.

Fig. 2 zeigt in Form eines Diagramms, das über angenommenen Raumzonen 0, 1 ... 6 aufgetragen ist, durch in diesen Raumzonen angenommene Objekte A, B, C, D, E erzeugte Echosignalprofile A', B', C', D', E', deren Amplitude bei kleine Echosignale erzeugenden Objekten, nämlich A, B, C, E mit zunehmender Entfernung und entsprechend zunehmender Laufzeit der Echosignale abnimmt. Lediglich das Objekt D, das ein kräftiges Echosignal erzeugt, ist durch ein entsprechendes Echosignalprofil D' deutlich gegenüber den benachbarten Echosignalamplituden herausgehoben. In der Figur ist mit T ein Totraum und mit R das Rauschen bezeichnet.

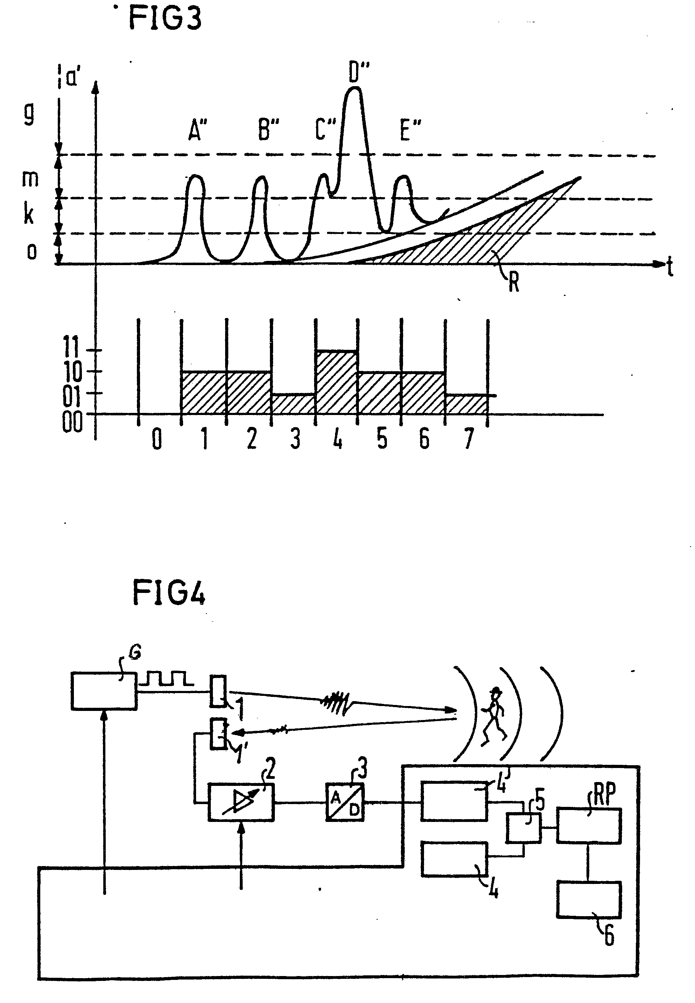

Fig. 3 zeigt ein Diagramm der genannten Echosignalprofile über der Zeit t, jedoch mit durch einen gesteuerten Empfangsverstärker normierten Amplitudenwerten, nämlich den normierten Echoprofilsignalen A'', B'', C'' und E''. Lediglich das dem ein kräftiges Echosignal erzeugenden Objekt D entsprechende Echoprofil D'' ist deutlich mit seiner Amplitude von den Amplituden der anderen normierten, entzerrten Echoprofilsignale unterschieden. Im unteren Teil der Fig. 3 ist über die dem zeitlichen Verlauf t angepaßte Adressenansteuerung N jeweils zugehörig zu einem entzerrten Echosignalprofil der zutreffende digitalisierte Wert eingetragen.

Fig. 4 zeigt das Blockschaltbild eines Ausführungsbeispiels für eine Anordnung des eigentlichen Raumüberwachungssystems und für eine die Auswertung der Echosignale ausführenden Schaltungsanordnung.

Wie bereits erläutert, zeigt Fig. 1 schematisch die Anordnung eines Ultraschallgerätes in einem zu überwachenden Raum mit festen und beweglichen Objekten, in diesem Fall mit einem angenommenen Einbrecher. Die entsprechend entstehenden, über die Zeit t gestaffelten Echosignale sind im mittleren Teil der Fig. 1 eingetragen. In unteren Teil der Fig. 1 sind schematisch digitalisierte Werte der beiden Echosignale, die von dem angenommenen Einbrecher hervorgerufen werden, zeitlich, und damit Adressen des diese Signale in der Folge aufnehmenden Speichers eingetragen. Erfindungsgemäß wird nun in einer Auswerteeinrichtung überwacht, ob sich das Echoprofil des Gesamtraumes nach einem ausgesendeten Ultraschallimpuls gegenüber dem Echoprofil des Gesamtraumes, das sich aus einem vorhergehenden Ultraschallimpuls ergibt, verändert hat. Eine solche Veränderung tritt immer dann ein, wenn sich in dem zu überwachenden Raum ein bewegtes Objekt befindet. Bewegte Objekte können nun periodische oder aperiodische Bewegungen ausführen. Objekte mit periodischen Bewegungen sind beispielsweise Penduluhren, Ventilatoren, Maschinenteile usf. Objekte mit aperiodischen Bewegungsabläufen sind beispielsweise Personen, die sich unbefugt in dem zu überwachenden Raum aufhalten. Gemäß der Erfindung werden Echosignale, die auf eine Bewegung in dem zu überwachenden Raum schließen lassen, hinsichtlich ihrer Relevanz überprüft. Stellt sich über einen Überwachungszeitraum vorgegebener Länge eine periodische Bewegung heraus, so ist diese mit an Sicherheit grenzender Wahrscheinlichkeit für die Zwecke des Raumüberwachungssystems irrelevant. Zur Bewertung der mit der zeitlichen Folge von Abtastimpulsen empfangenen Echosignale werden diese mittels eines Analog/Digital-Wandlers 3 in Binärwörter umgesetzt, die jeweils in ihrer Gesamtheit für einen ausgesendeten Abtastimpuls ein digitales Abbild der akustischen Situation des zu überwachenden Raumes darstellen. Die eintreffenden, digitalisierten Abbilder werden in Form der genannten Binärwörter in der Reihenfolge ihres Eintreffens in einen Speicher 4, 4' eingelesen, aus dem sie zum Zwecke des Vergleichens mit den betreffenden Binärwörtern, die auf Grund des folgenden oder des übernächsten Abtastimpulses entstanden sind, ausgelesen und in einer Vergleichseinrichtung 5 miteinander verglichen werden. Bei Äquivalenz aller Binärwörter aus zwei aufeinanderfolgenden oder zwei zeitlich dicht beisammenliegenden digitalen Abbildern des zu überwachenden Raumes liegt kein alarmrelevantes Ergebnis vor. Wird jedoch eine Ungleichheit festgestellt, ist zu prüfen, ob diese Ungleichheit auf periodische, irrelevante Bewegungen innerhalb des zu überwachenden Raumes zurückzuführen sind oder ob diese Abweichung alarmrelevant ist.

Für die Bildung solcher Vergleiche ist der zu überwachende Raum in mehrere Zonen 0, 1 ... 6, vgl. Fig. 2, aufgeteilt. Der Raum ist vorteilhafterweise in mindestens 3 Zonen aufgeteilt.

Gemäß einer Weiterbildung der Erfindung bleibt bei der Prüfung der akustischen Abbilder zumindest eine Zone, z. B. 3, unberücksichtigt, weil in dieser Zone angenommen wird, daß aperiodische Bewegungen, die nicht vorhersehbar sind, ablaufen.

Zum Zwecke der Selbstüberwachung der Funktionstüchtigkeit des Ultraschall-Raumüberwachungssystems kann gemäß einer anderen Weiterbildung der Erfindung vorteilhafterweise gezielt ein Hilfsobjekt in dem zu überwachenden Raum, beispielsweise ein Ventilator, in Bewegung gesetzt werden.

Für ein bevorzugtes Ausführungsbeispiel ist gemäß Fig. 4 vorgesehen, daß ein dem Ultraschall-Empfangswandler 1', der Echosignale aufgrund von Sendesignalen aus einem Ultraschall-Sendewandler 1, welcher von einem Generator G gesteuert wird, empfängt, nachgeschalteter Signalverstärker 2 als regelbarer Verstärker realisiert ist und daß der Signalverstärker 2 entsprechend den von der Ultraschall-Laufzeit abhängigen Amplituden der Echosignale derart geregelt wird, daß einem dem Signalverstärker nachgeschalteten Analog/Digital-Wandler 3 zur Erzeugung betreffender Binärwörter Signale mit normierten Amplituden A'', B'', C'', D'', E'' zuführbar sind. Vorteilhaft an dieser Anordnung ist, daß trotz der aufgrund der Laufzeiten bzw. der unterschiedlichen Entfernungen für die Echosignale auftretenden Amplitudendämpfungen eine einheitliche, und daher einfache Digitalisierung der Echosignale vorgenommen werden kann. Die Amplituden der jeweils empfangenen Echosignale werden vorteilhafterweise in den Binärwörtern durch mehrere diese Amplituden kennzeichnende Bits repräsentiert.

Die den empfangenen Echosignalen entsprechenden Binärwörter werden zweckmäßig in der Reihenfolge ihres Eintreffens mit jeweils um eine Stelle erhöhter Adresse A, N in einen Halbleiterspeicher, vorzugsweise RAM, eingelesen. Es ist jedoch auch möglich, die den empfangenen Echosignalen entsprechenden Binärwörter in der Reihenfolge ihres Eintreffens in einem zyklisch umlaufenden Speicher, vorzugsweise ein entsprechend angeordnetes CCD, eingelesen.

Eine weitere vorteilhafte Weiterbildung der Erfindung ist dadurch gekennzeichnet, daß eine Kombination mit einem nach dem an sich bekannten Passiv-Infrarot-Verfahren PIR arbeitenden Raumüberwachungssystem vorgesehen ist.

Gemäß einer anderen vorteilhaften Weiterbildung der Erfindung ist vorgesehen, daß mehrere, jeweils einen Sektor einer kugelschalenförmigen Raumzone betreffende Einzelsysteme vorgesehen sind, mittels derer jeweils die akustische Situation des ihnen zugeteilten Sektors ermittelt wird, und daß die einzelnen digitalen Abbilder der akustischen Situationen in einer digitalen Auswerteeinrichtung miteinander verarbeitet werden.

Das erfindungsgemäße Ultraschall-Raumüberwachungssystem erlaubt vorteilhafterweise, die Grenzen der Raumzonen variabel zu bemessen, so daß Raumbereiche von besonderer Bedeutung zum Zwecke einer größeren Auflösung der betreffenden digitalen Abbilder enger gestaffelt sein können. Außerdem ist vorgesehen, Raumzonen, in denen Verdacht auf eine relevante Veränderung vorliegt, nochmals mit einer feineren Staffelung abzutasten.

**Patentansprüche**

1.    Ultraschall-Raumüberwachungssystem nach dem Impuls-Echo-Verfahren, bei dem ein Ultraschall-Sende-/Empfangswandler (1) vorgesehen ist, der periodisch Abtastimpulse sendet, bei dem der Ultraschall-Sende-/Empfangswandler (1) jeweils in der Zeitspanne zwischen zwei Abtastimpulsen empfangsbereit geschaltet wird, bei dem die zeitliche Folge von einem Abtastimpuls zuordenbaren Echosignalen nach Durchlaufen eines Analog/Digital-Wandlers (3) als digitales Abbild in Form einer Folge von Binärworten, wobei ein Binärwort das akustische Abbild einer kugelschalenförmigen, bemeßbaren Raumzone (0—6) mit dem Ultraschallgerät im Zentrum repräsentiert, in der Reihenfolge ihres Eintreffens in einen Speicher (4, 4') eingelesen werden, bei dem jeweils zumindest zwei zeitlich aufeinanderfolgende Folgen von digitale Abbilder des Gesamtraumes repräsentierenden Binärwörtern in einer Vergleichseinrichtung (5) derart miteinander verglichen werden, daß bei einer vorliegenden Abweichung zwischen zumindest zwei betreffenden Binärwörtern eine Relevanzprüfung (RP) vorgenommen wird, wobei gemäß dem Verwendungszweck des Ultraschall-Raumüberwachungssystems irrelevante, durch beispielsweise periodische Bewegungen von echoerzeugenden Gegenständen hervorgerufene Abweichungen unausgewertet bleiben, und bei dem bei Vorliegen einer relevanten Abweichung eine Meldevorrichtung (6) aktiviert wird, dadurch gekennzeichnet, daß zur Prüfung der Geschwindigkeit von etwaigen Objektbewegungen der Dopplereffekt ausgenutzt wird und daß in den betreffenden Binärwörtern zumindest 1 Bit zur Kennzeichnung der durch den Dopplereffekt angezeigten Geschwindigkeit vorgesehen ist.

2. Ultraschall-Raumüberwachungssystem nach Anspruch 1, dadurch gekennzeichnet, daß der zu überwachende Raum in mehrere Zonen (0, 1 ... 6) aufgeteilt ist und daß bei der Prüfung der akustischen Abbilder mindestens die Binärwörter zweier benachbarter Zonen (z. B. 2, 3) miteinander verglichen werden.

3. Ultraschall-Raumüberwachungssystem nach Anspruch 2, dadurch gekennzeichnet, daß der zu überwachende Raum in mindestens drei Zonen aufgeteilt ist.

4. Ultraschall-Raumüberwachungssystem nach Anspruch 1, 2 oder 3, dadurch gekennzeichnet, daß bei der Prüfung der akustischen Abbilder mindestens eine Zone (z. B. 3) unberücksichtigt bleibt.

5. Ultraschall-Raumüberwachungssystem nach Anspruch 1, dadurch gekennzeichnet, daß zum Zwecke der Selbstüberwachung die Funktionstüchtigkeit des Ultraschall-Raumüberwachungssystems dadurch geprüft wird, daß in dem zu überwachenden Raum gezielt ein Hilfsobjekt, beispielsweise ein Ventilator, in Bewegung gesetzt wird.

6. Ultraschall-Raumüberwachungssystem nach einer der vorhergehenden Ansprüche, dadurch gekennzeichnet, daß eine Kombination mit einem nach dem an sich bekannten Passiv-Infrarot-Verfahren (PIR) arbeitenden Raumüberwachungssystem vorgesehen ist.

7. Ultraschall-Raumüberwachungssystem nach einem der vorhergehenden Ansprüche, dadurch gekennzeichnet, daß mehrere, jeweils einen Sektor einer kugelschalenförmigen Raumzone betreffende Einzelsysteme vorgesehen sind, mittels derer jeweils die akustische Situation des ihnen zugeteilten Sektors ermittelt wird, und daß die einzelnen digitalen Abbilder der akustischen Situationen in einer digitalen Auswerteeinrichtung miteinander verarbeitet werden.

8. Ultraschall-Raumüberwachungssystem nach Anspruch 1, dadurch gekennzeichnet, daß ein dem Ultraschall-Empfangswandler (1) nachgeschalteter Signalverstärker (2) als regelbarer Verstärker realisiert ist und daß der Signalverstärker (2) entsprechend den von der Ultraschall-Laufzeit abhängigen Amplituden der Echosignale derart geregelt wird, daß einem dem Signalverstärker (2) nachgeschalteten Analog/Digital-Wandler (3) zur Erzeugung betreffender Binärwörter Signale mit normierten Amplituden zuführbar sind.

9. Ultraschall-Raumüberwachungssystem nach Anspruch 1 oder 8, dadurch gekennzeichnet, daß die Binärwörter mehrere die jeweils zu verzeichnende Amplitude eines Echosignals kennzeichnende Bits enthalten.

10. Ultraschall-Raumüberwachungssystem nach einem der Ansprüche 1, 8 oder 9, dadurch gekennzeichnet, daß die den empfangenen Echosignalen (A'', B'', C'', D'', E'') entsprechenden Binärwörter in der Reihenfolge ihres Eintreffens mit jeweils um eine Stelle erhöhter Adresse (A, N) in einem Halbleiterspeicher, vorzugsweise RAM, eingelesen werden.

11. Ultraschall-Raumüberwachungssystem nach einem der Ansprüche 1, 8 oder 9, dadurch gekennzeichnet, daß die den empfangenen Echosignalen (A''. B'', C'', D'', E'') entsprechenden Binärwörter in der Reihenfolge ihres Eintreffens in einen zyklisch umlaufenden Speicher, vorzugsweise ein entsprechend angeordnetes CCD, eingelesen werden.

## Claims

1. An ultrasonic space monitoring system utilising the pulse-echo-method, wherein an ultrasonic transmitting/receiving transducer (1) transmits periodic scanning pulses, and wherein the ultrasonic transmitting/receiving transducer (1) is switched so as to be ready to receive during the time interval between two scanning pulses, and wherein the time sequence of echo signals, which can be allocated to a scanning pulse, having passed through an analogue/digital converter (3), is read into a store (4, 4') as a digital image in the form of a sequence of binary words in the order of their arrival, where a binary word represents the acoustic image of a measurable spacial zone (0—6) shaped like a spherical shell with the ultrasonic device in the centre, and wherein at least two sequences of binary words, which are consecutive in time, which represent digital images of the overall space, are compared with one another in a comparison device (5) in such manner that in the case of a deviation between at least two binary words concerned, a relevance check (RP) is carried out, whereby in accordance with the intended purpose of the ultrasonic space monitoring system irrelevant deviations caused, for example, by periodic movements of echoproducing objects remain unanalysed, and wherein when a relevant deviation is present an alarm device (6) is activated, characterised in that in order to check the speed of possible movements of objects the Doppler effect is utilised and that there is arranged in the respective binary words at least one bit which serves to mark the speed indicated by means of the Doppler effect.

2. An ultrasonic space monitoring system as claimed in Claim 1, characterised in that the space to be monitored is divided into a plurality of zones (0.1 ... 6), and that when checking the acoustic images at least the binary words of two adjacent zones (e. g. 2, 3) are compared with one another.

3. An ultrasonic space monitoring system as claimed in Claim 2, characterised in that the space to be monitored is divided into at least three zones.

4. An ultrasonic space monitoring system as claimed in Claim 1, 2 or 3, characterised in that when checking the acoustic images at least one zone (e. g. 3) remains unconsidered.

5. An ultrasonic space monitoring system as claimed in Claim 1, characterised in that for the purpose of automatic monitoring the functional efficiency of the ultrasonic space monitoring system is tested in that an auxiliary object, for example a fan, is intentionally set in motion in the space to be monitored.

6. An ultrasonic space monitoring system as claimed in one of the preceding Claims, characterised in that there is provided a combination with a space monitoring system which operates in accordance with the passive infrared method (PIR) which is known per se.

7. An ultrasonic space monitoring system as claimed in one of the preceding Claims, characterised in that there is provided a plurality of individual systems which respectively concern a sector of a zone which is shaped like a spherical shell, by means of which individual systems the acoustic situation of their assigned sector is determined, and that the individual digital images of the acoustic situations are processed with one another in a digital analysing device.

8. An ultrasonic space monitoring system as claimed in Claim 1, characterised in that a signal amplifier (2) connected following the ultrasonic receiving transducer (1) is constructed as a controllable amplifier, and that the signal amplifier (2) is controlled in accordance with the amplitudes of the echo signals, which are dependent upon the ultrasonic transit time, in such a manner that in order to produce binary words an analogue/digital converter (3) connected following the signal amplifier (2) can be supplied with standardised amplitudes.

9. An ultrasonic space monitoring system as claimed in Claim 1 or 8, characterised in that the binary words include a plurality of bits characterising the amplitude of an echo signal which is to be registered.

10. An ultrasonic space monitoring system as claimed in one of Claims 1, 8 or 9, characterised in that the binary words corresponding to the received echo signals (A''. B'', C', C'', E'') are read into a semiconductor store, preferably a RAM, in the sequence of their arrival with an address (A, N) which is increased by one place in each case.

11. An ultrasonic space monitoring system as claimed in one of claims 1, 8 or 9, characterised in that the binary words corresponding to the received echo signals (A'', B'', C'', D'', E'') are read into a cyclically circulating store, preferably a correspondingly arranged CCD, in the sequence of their arrival.

## Revendications

1. Système à ultrasons pour le contrôle d'espaces selon le procédé à échos d'impulsions, dans lequel il est prévu un transducteur d'émission/récepteur d'ultrasons (1) qui émet périodiquement des impulsions d'exploration, et dans lequel le transducteur d'émission/réception d'ultrasons (1) est branché à l'état prêt à la réception pendant l'intervalle de temps compris entre deux impulsions d'exploration, et dans lequel la suite dans le temps de signaux d'échos pouvant être associés à une impulsion d'exploration, est mémorisée dans l'ordre d'arrivée des signaux dans une mémoire (4, 4'), après passage dans un convertisseur analogique/numérique (3), en tant qu'image numérique sous la forme d'une suite de mots binaires, le mot binaire représentant l'image acoustique de la zone spatiale (0—6) mesurable, en forme de cuvette sphérique, contenant en son centre l'appareil à ultrasons, et dans lequel au moins deux suites, se succédant dans le temps, de mots binaires représentant des images numériques de l'ensemble de l'espace sont comparées entre elles dans un dispositif comparateur (5) de telle manière que dans le cas de la présence d'un écart entre au moins deux mots binaires considérés, un contrôle de validité (RP) est effectué, tandis que conformément au but d'utilisation du système à ultrasons pour le contrôle d'espaces, des écarts non valables provoqués par des déplacements par exemple périodiques d'objets produisant des échos restent non exploités, et dans lequel lors de la présence d'un écart valable, un dispositif de signalisation (6) est actionné, caractérisé par le fait pour le contrôle de la vitesse de déplacements éventuels d'objets, on utilise l'effet Doppler et que, dans les mots binaires considérés, au moins 1 bit est prévu pour la caractérisation de la vitesse indiquée par l'effet Doppler.

2. Système à ultrasons pour le contrôle d'espaces selon la revendication 1, caractérisé par le fait que l'espace à contrôler est subdivisé en plusieurs zones (0, 1, ... 6) et que lors du contrôle des images acoustiques, au moins les mots binaires de deux zones voisines (par exemple 2, 3) sont comparés entre eux.

3. Système à ultrasons pour le contrôle d'espaces selon la revendication 2, caractérisé par le fait que l'espace à contrôler est subdivisé en au moins trois zones.

4. Système à ultrasons pour le contrôle d'espaces selon la revendication 1, 2 ou 3, caractérisé par le fait que lors du contrôle des images acoustiques, au moins une zone (3) n'est pas prise en compte.

5. Système à ultrasons pour le contrôle d'espaces selon la revendication 1, caractérisé en ce qu'en vue du contrôle automatique, l'aptitude de fonctionnement du système à ultrasons pour le contrôle d'espaces est contrôlée grâce au fait qu'un objet auxiliaire, par exemple un oscillateur est volontairement mis en mouvement dans l'espace à contrôler.

6. Système à ultrasons pour le contrôle d'espaces selon l'une des revendications précédentes, caractérisé en ce. qu'il est prévu une combinaison avec un système de contrôle d'espaces travaillant selon le procédé passif aux infrarouges (PI) connu en soi.

7. Système à ultrasons pour le contrôle d'espaces selon l'une des revendications précédentes, caractérisé en ce qu'il est prévu plusieurs systèmes individuels associés chacun à un secteur d'une zone d'espace en forme de coque sphérique et au moyen desquels la situation acoustique du secteur, qui leur est associée, est déterminée, et que les différentes images numériques des situations acoustiques sont traitées ensemble dans un dispositif d'évaluation numérique.

8. Système à ultrasons pour le contrôle d'espaces selon la revendication 1, caractérisé en ce qu'un amplificateur de signaux (2), branché en aval du transducteur de réception d'ultrasons (1) est réalisé sous la forme d'un amplificateur réglable et que l'amplificateur de signaux (2) est réglé en fonction des amplitudes, dépendant du temps de transit des ultrasons, des signaux d'échos de telle manière que des signaux possédant des amplitudes normalisées peuvent être envoyés à un convertisseur analogique/numérique (3) branché en aval de l'amplificateur de signaux (2) pour la production de mots binaires considérés.

9. Système à ultrasons pour le contrôle d'espaces, selon la revendication 1 ou 8, caractérisé par le fait que les mots binaires contiennent plusieurs bits, caractérisant l'amplitude, devant être consignée d'un signal d'écho.

10. Système à ultrasons pour le contrôle d'espaces selon l'une des revendications 1, 8 ou 9, caractérisé en ce que les mots binaires correspondant aux signaux d'échos reçus (A'', B'', C'', D'', E'') sont enregistrés, dans l'ordre de leur apparition, avec une adresse (A, N) accrue d'une position, dans une mémoire à semiconducteurs, de préférence une mémoire RAM.

11. Système à ultrasons pour le contrôle d'espaces selon l'une des revendications 1, 8 ou 9, caractérisé par le fait que les mots binaires correspondant aux signaux d'échos reçus (A'', B'', C'', D'', E'') sont enregistrés, dans l'ordre de leur arrivée, dans une mémoire à circulation cyclique de préférence un CCD monté de façon appropriée.

0 026 385

FIG 1

FIG 2

## FIG3

## FIG4